(19) **Europäisches Patentamt**

**European Patent Office**

**Office européen des brevets**

(11) **EP 0 603 121 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(51) Int. Cl.$^6$: **B23B 51/04**, E21B 10/48

(21) Anmeldenummer: **93810830.5**

(22) Anmeldetag: **26.11.1993**

(54) **Hohlbohrkrone mit stirnseitigen Schneiden**

Tubular drill

Font tubulaire

(84) Benannte Vertragsstaaten:
**AT BE CH DE DK FR GB IT LI NL SE**

(30) Priorität: **16.12.1992 DE 4242465**

(43) Veröffentlichungstag der Anmeldung:
**22.06.1994 Patentblatt 1994/25**

(73) Patentinhaber: **HILTI Aktiengesellschaft**
**FL-9494 Schaan (LI)**

(72) Erfinder:
• **Stöck, Maximilian**
**CH-9478 Azmoos (CH)**

• **Wohlwend, Ernst**
**FL-9485 Nendeln (LI)**
• **Ott, William**
**FL-9494 Schaan (LI)**

(74) Vertreter: **Wildi, Roland**
**FL-9494 Schaan (LI)**

(56) Entgegenhaltungen:
**EP-A- 0 508 941**      **DE-A- 2 234 825**
**DE-A- 3 408 093**      **GB-A-  557 335**
**US-A- 2 412 433**

## Beschreibung

Die Erfindung betrifft eine Hohlbohrkrone, deren bohrrichtungsseitige Stimseite mit mindestens einem, mindestens zwei Schneiden aufweisenden Schneidensatz versehen ist, wobei die Schneiden eines jeden Schneidensatzes im wesentlichen in Drehrichtung weisende, freiliegende Schneidflächen unterschiedlicher Grösse aufweisen und die Schneiden innerhalb eines Schneidensatzes derart angeordnet sind, dass die Schneidflächen entgegen der Drehrichtung in ihrer Grösse zunehmen.

Eine derartige Hohlbohrkrone ist aus DE-A-3619334 bekannt.

Zum Herstellen von Bohrungen grösseren Durchmessers in Bauteilen sind Hohlbohrkronen verschiedenster Bauart bekannt. Insbesondere bei der Herstellung grösserer Bohrungen in Bauteilen, welche aus Mauerwerk bestehen, finden Hohlbohrkronen Anwendung, welche einem rein drehenden Antrieb unterliegen. Insbesondere bei solchen Anwendungsfällen besteht ein grosses Bedürfnis, Hohlbohrkronen zur Verfügung zu stellen, welche eine Anwendung ohne flüssige Kühlmedien ermöglichen.

Beispielsweise die aus der DE-A- 36 19 334 bekannte Hohlbohrkrone, weist bohrrichtungsseitige Stimseite Schneiden mit freiliegenden Schneidflächen auf. Die Schneiden sind bei dieser bekannten Hohlbohrkrone aus einem verschleissfesten Werkstoff. Zudem nimmt entgegen der Drehrichtung die effektiv an der Bearbeitung teilnehmende Schneidfläche in ihrer Grösse zu, was zur Folge hat, dass jede zum Einsatz gelangende Schneide ihren Anteil an abtragender Bearbeitung leistet.

Während gemäss der vorstehend genannten Hohlbohrkrone als Material für die Schneiden ein verschleissfester, harter Werkstoff vorgeschlagen wird, hat sich bei Anwendungen im Mauerwerk gezeigt, dass insbesondere an sich bekannte polykristalline Diamantplättchen als Schneiden geeignet sind. Bei diesen Diamantplättchen weist ein Hartmetall-Grundkörper entweder im Verbund, beispielsweise polykristallin oder beschichtet Diamanten auf.

Schneiden der vorgenannten Art erfordem jedoch ein ausreichendes Eindringen in das zu bearbeitende Material, beispielsweise Mauerwerk, so dass es nicht zu einem zu starken abrasiven Verschleiss kommt. in Abhängigkeit von der Anpresskraft ist für die einwandfreie Funktion der Hohlbohrkrone damit sicherzustellen, dass jede Schneide durch ausreichendes Eindringen in das zu bearbeitende Material am Bohrvorgang teilnimmt.

Ansätze im vorgenannten Sinne zeigt die Hohlbohrkrone entsprechend DE-OS 36 19 334. Allerdings handelt es sich hier um keilförmige Schneiden, welche in unterschiedlichen Ausrichtungen angeordnet sind, so dass als Vorschneider wirkende Schneiden nur einen Teil des Materials bearbeiten und die nachfolgenden Schneiden die weitere Bearbeitung bewerkstelligen. Da bei dieser bekannten Lösung die Aufgabe durch identisch ausgebildete, jedoch unterschiedlich ausgerichtete Schneiden erfolgt, entstehen gewisse Ueberbeanspruchungen, da bei einem Teil der Schneiden nur die Spitzen und bei einem weiteren Teil der Schneiden nur die Ecken beansprucht werden. Ein frühzeitiger Verschleiss samt Ausfall der Hohlbohrkrone ist die Folge davon.

Der Erfindung liegt die Aufgabe zugrunde, eine Hohlbohrkrone insbesondere zur trockenen, schlagfreien Anwendung zu schaffen, welche eine hohe Standzeit bei einer akzeptablen, gegebenenfalls von Hand aufbringbaren Anpresskraft gewährleistet.

Erfindungsgemäss wird die Aufgabe dadurch gelöst, dass die radial gemessene Breite der Schneidflächen der Schneiden eines Schneidsatzes sich nach der Formel

$$bi = \frac{i \times B \times k}{N}$$

errechnet, wobei bedeuten:

bi: Breite der jeweiligen Schneidfläche eines Schneidensatzes

i: entgegen der Drehrichtung aufsteigende Zahl der Schneiden eines Schneidensatzes

B: Breite der Schneidfläche der entgegen der Drehrichtung letzten Schneide eines Schneidensatzes

N: Gesamtzahl der Schneiden eines Schneidensatzes

k: 0,7 bis 1,5

Die erfindungsgemäss angegebene Formel führt zu einer Dimensionierung der Schneidflächen in der Weise, dass jede Schneide einen ausreichenden Beitrag beim Abtragen des zu bearbeitenden Materials leistet. Es ist damit ein ausreichendes Eindringen in das zu bearbeitende Material sichergestellt, so dass ein abrasiver, zu einem Stumpfwerden der Schneiden führender Verschleiss unterbunden wird.

Die angegebene Formel geht davon aus, dass die Breite der entgegen der Drehrichtung letzten Schneide eines Schneidensatzes bekannt ist, dh es handelt sich hier um die Breite des effektiv aus dem zu bearbeitenden Bauteil herauszubohrenden Ringspaltes. Unter N wird die Gesamtzahl jener Schneiden verstanden, welche tatsächlich am Bearbeitungsvorgang teilnehmen, dh es handelt sich um die Schneiden eines Schneidensatzes, die jeweils eine unterschiedliche Grösse in ihren Schneidflächen aufweisen. Sofern zusätzlich ausserhalb eines Schneidensatzes noch Schneiden vorhanden sind, deren Schneidfläche der Grösse einer bereits vorhandenen Schneide eines Schneidensatzes entspricht, nimmt diese Schneide nicht an der Bearbeitung des Materiales teil, sondern sie kann allenfalls zur Verbesserung der Führung der Hohlbohrkrone beitragen, um beispielsweise die Rundlaufgenauigkeit zu erhöhen. Der Korrekturfaktor k berücksichtigt Abweichungen in der Dimensionierung bei der Breite der Schneidflächen sowohl nach oben als auch nach unten, wobei die Erzielung noch ausreichend befriedigender Resultate sichergestellt ist.

In Ergänzung zur vorgenannten Lehre, gemäss welcher die unterschiedliche Grösse der Schneidflächen durch entsprechende Dimensionierung ihrer Breite erfolgt, kann zusätzlich die parallel zur Bohrkronenachse gemessene Höhe der Schneidflächen variieren. Dabei ist vorzugsweise im Sinne der Zunahme der Schneidflächen der Schneiden eines Schneidensatzes die entgegen der Drehrichtung folgende Schneide gegenüber der jeweils davorliegenden Schneide um eine parallel zur Bohrkronenachse gemessene Höhe zurückversetzt.

Vorzugsweise beträgt die parallel zur Bohrkronenachse gemessene Höhe, um welche entgegen der Drehrichtung die Schneiden zurückversetzt sind, 0,1 bis 1 mm.

Die Dimensionierung der Schneiden führt dazu, dass innerhalb eines Schneidensatzes jede Schneide ihren Anteil an der Bearbeitung des aus dem Bauteil herauszubohrenden Ringspaltes beiträgt. In bezug auf die Breite bedeutet dies, dass die erste Schneide eines Schneidsatzes einen schmalen Ringspalt herausarbeitet, welcher von der oder den nachfolgenden Schneiden erweitert wird. Es ist dadurch sichergestellt, dass jede Schneide ausreichend in das zu bearbeitende Material des Bauteiles eindringt, sowohl in der Breite als auch in axialer Richtung, sofern in bevorzugter Weise auch die Höhendimensionierung der Schneiden zur Anwendung kommt. Die Anpresskraft, welche insbesondere im Hinblick auf die Verwendung der erfindungsgemässen Hohlbohrkronen in handbetriebenen Geräten 200 Newton nicht übersteigen soll, verteilt sich damit auf alle am Bearbeitungsvorgang teilnehmenden Schneiden eines Schneidensatzes.

Vorteilhafte Werte sowohl aus der Sicht der Bohrleistung als auch aus der Sicht der aufzubringenden Anpresskraft werden dann erreicht, wenn pro Schneidensatz in bevorzugter Weise zwei bis fünf Schneiden vorgesehen sind. Aufgrund der vorstehenden Dimensionierung der Schneidflächen leistet jede Schneide innerhalb eines Schneidensatzes ihren Beitrag an der Bearbeitung. Die Schneiden mit einer kleineren Schneidfläche wirken dabei als Vorschneiden, während die letzte Schneide des Schneidensatzes mit ihrer grössten Schneidfläche die schlussendliche Breite des herauszubohrenden Ringspaltes vervollständigt.

Während Hohlbohrkronen mit nur einem Schneidensatz der vorgenannten Art bestückt sein können, besteht überdies die Möglichkeit, weitere Schneidensätze vorzusehen. Bevorzugt Anwendung finden dabei ein bis acht Schneidensätze. Die Dimensionierung der Schneidflächen entsprechend vorliegender Erfindung sowohl hinsichtlich Breite als auch Höhe findet dabei in jedem Schneidensatz für sich statt und wiederholt sich von Schneidensatz zu Schneidensatz.

Sowohl bei Hohlbohrkronen, welche nur aus einem Schneidensatz als auch aus mehreren Schneidensätzen bestehen, bietet sich die Möglichkeit an, zwischen einzelnen Schneiden reine Führungskörper, beispielsweise aus einem höherwertigen Werkstoff, vorzusehen. Solche Führungskörper verbessern den Rundlauf und die Führung der Hohlbohrkrone.

Die Erfindung wird nachstehend anhand von Zeichnungen, welche Ausführungsbeispiele wiedergeben, näher erläutert. Es zeigen:

Fig. 1    eine Draufsicht auf den stirnseitigen Bereich einer Hohlbohrkrone mit einem Schneidensatz von drei Schneiden;

Fig. 2    eine Draufsicht auf die Stirnseite der Hohlbohrkrone der Fig. 1;

Fig. 3    eine Draufsicht auf den stirnseitigen Bereich einer Hohlbohrkrone mit zwei Schneidensätzen von je zwei Schneiden;

Fig. 4    eine Draufsicht auf die Stirnseite der Hohlbohrkrone der Fig. 3.

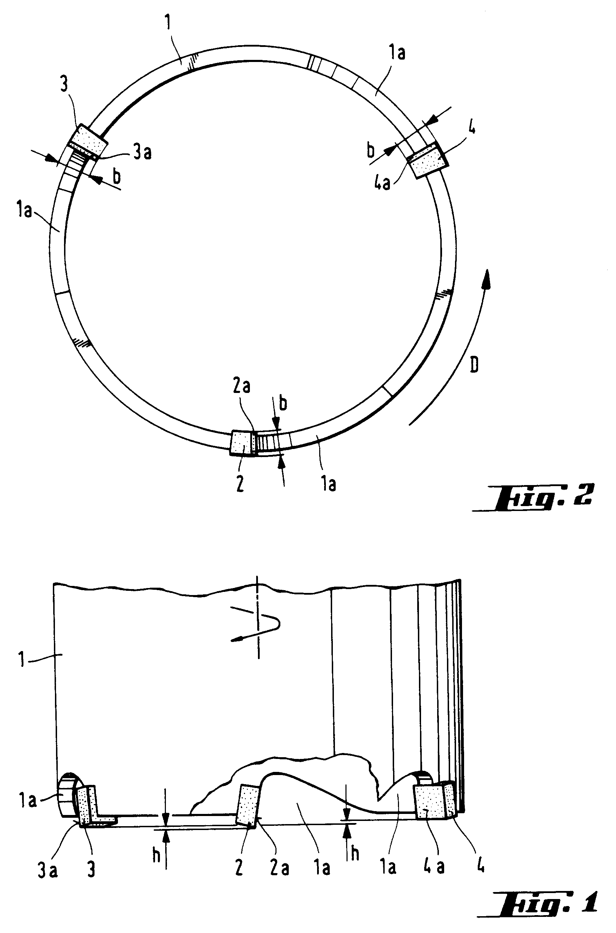

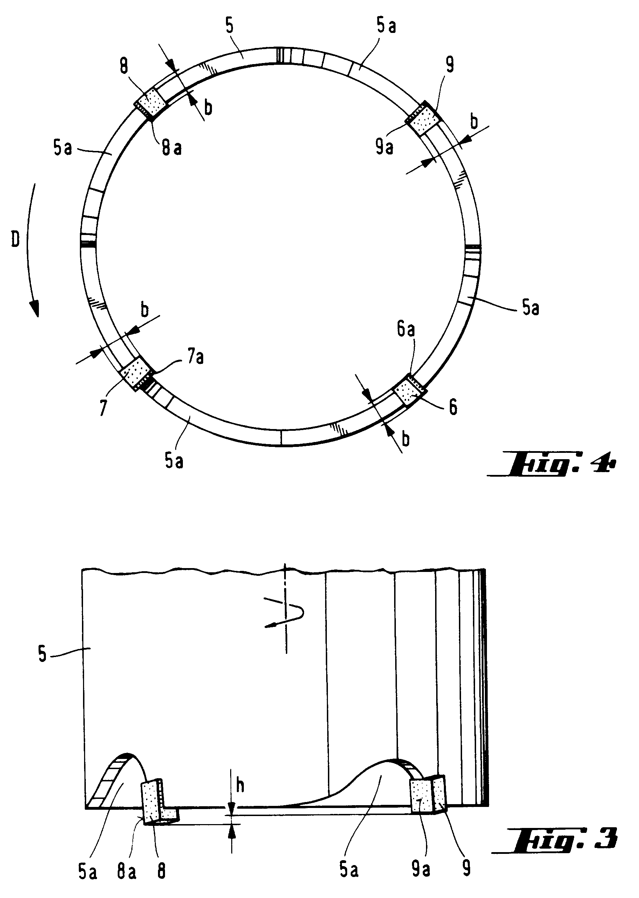

Die Fig. 1 und 2 zeigen eine Hohlbohrkrone mit einem Trägerkörper 1 und Schneiden 2, 3, 4 eines Schneidensatzes. Die Schneiden 2, 3, 4, sind beispielhaft sowohl formschlüssig als auch stoffschlüssig mit dem Trägerkörper 1 verbunden. Zur Freilegung der Schneidflächen 2a, 3a, 4a der Schneiden 2,3,4 weist der Trägerkörper 1 Aussparungen 1a auf.

Wie insbesondere Fig. 2 zeigt, weisen die Schneidflächen 2a, 3a, 4a der Schneiden 2,3, 4 eine Breite b auf, die bei entgegen der Drehrichtung D hintereinander angeordneten Schneiden 2,3,4 zunimmt. Darüber hinaus zeigt Fig. 1, wie die entgegen der Drehrichtung folgenden Schneiden 3, 4 gegenüber der jeweils davorliegenden 2, 3 je um die parallel zur Kronenachse gemessene Höhe h zurückversetzt sind.

Die Fig. 3 und 4 zeigen eine Bohrkrone mit einem Trägerkörper 5 und Schneiden 6,7, 8, 9. Wie insbesondere Fig. 4 zeigt, handelt es sich um zwei Schneidensätze je mit Schneiden 6,7 und Schneiden 8,9.

Zur Freilegung der Schneidflächen 6a, 7a, 8a, 9a der Schneiden 6, 7, 8, 9 weist der Trägerkörper 5 Aussparungen 5a auf.

Die Schneidflächen 6a, 7a, 8a, 9a der Schneiden 6, 7, 8, 9 weisen eine Breite b auf, wie dies insbesondere Fig. 4 zeigt. Innerhalb je eines Schneidensatzes nimmt die Breite b entgegen der Drehrichtung D zu. Darüber hinaus ist - wie dies insbesondere Fig. 3 zeigt - innerhalb eines jeden Schneidensatzes im Sinne der Zunahme der Schneidflächen 7a, 9a die jeweils entgegen der Drehrichtung folgende Schneide 7, 9 gegenüber der davorliegenden Schneide 6, 8 um eine parallel zur Bohrkronenachse gemessene Höhe h zurückversetzt.

**Patentansprüche**

1.   Hohlbohrkrone, deren bohrrichtungsseitige Stirnseite mit mindestens einem, mindestens zwei Schneiden (2, 3, 4, 6, 7, 8, 9) aufweisenden Schneidensatz versehen ist, wobei die Schneiden (2,3,4,6,7,8,9) eines jeden Schneidensatzs im wesentlichen in Drehrichtung (D) weisende, freiliegende Schneidflächen (2a, 3a, 4a, 6a, 7a, 8a, 9a) unterschiedlicher Grösse aufweisen und die Schneiden (2,3, 4, 6, 7, 8, 9) innerhalb eines Schneidensatzes derart angeordnet sind, dass die Schneidflächen (2a, 3a, 4a, 6a, 7a, 8a, 9a) entgegen der Drehrichtung (D) in ihrer Grösse zunehmen, **dadurch gekennzeichnet**, dass die radial gemessene Breite (b) der Schneidflächen (2a, 3a, 4a, 6a, 7a, 8a, 9a) der Schneiden eines Schneidensatzes sich nach der Formel

$$bi = \frac{i \times B \times k}{N}$$

errechnet, wobei bedeuten:

bi = Breite der jeweiligen Schneidfläche (2a, 3a, 4a, 6a, 7a, 8a, 9a) eines Schneidensatzes

i = entgegen der Drehrichtung (D) aufsteigende Zahl (1 bis N) der Schneiden (2,3,4,6,7,8,9) eines Schneidensatzes

B = Breite der Schneidfläche (4a, 7a, 9a) der entgegen der Drehrichtung (D) letzten Schneide (4,7,9) eines Schneidensatzes

N = Gesamtzahl der Schneiden (2,3,4,6,7,8,9) eines Schneidensatzes

k = 0,7 bis 1,5

2. Hohlbohrkrone nach Anspruch 1, dadurch gekennzeichnet, dass im Sinne der Zunahme der Schneidflächen (2a, 3a, 4a, 6a, 7a, 8a, 9a) der Schneiden (2,3,4,6, 7,8,9) eines Schneidensatzes die entgegen der Drehrichtung folgende Schneide (3, 4, 7, 9) gegenüber der jeweils davorliegenden Schneide (2, 6, 8) um eine parallel zur Bohrkronenachse gemessene Höhe (h) zurückversetzt ist.

3. Hohlbohrkrone nach Anspruch 2, dadurch gekennzeichnet, dass die Höhe (h) 0,1 bis 1 mm beträgt.

4. Hohlbohrkrone nach einem der Ansprüche 1 bis 3, dadurch gekennzeichnet, dass pro Schneidensatz zwei bis fünf Schneiden (2,3,4,6,7,8,9) vorgesehen sind.

5. Hohlbohrkrone nach einem der Ansprüche 1 bis 3, dadurch gekennzeichnet, dass ein bis acht Schneidensätze vorgesehen sind.

## Claims

1. A hollow drill bit, the end face of which in the direction of drilling is provided with at least one set of cutters having at least two cutters (2,3,4,6,7,8,9), wherein the cutters (2, 3,4, 6, 7, 8, 9) of each set of cutters comprise exposed cutting faces (2a, 3a, 4a, 6a, 7a, 8a, 9a) of different sizes pointing substantially in the direction of rotation (D) and the cutters (2, 3, 4, 6, 7, 8, 9) within a set of cutters are arranged in such a way that the size of the cutting faces (2a, 3a, 4a, 6a, 7a, 8a, 9a) increases opposite to the direction of rotation (D), characterised in that the radially measured width (b) of the cutting faces (2a, 3a, 4a, 6a, 7a, 8a, 9a) of the cutters of a set of cutters is calculated according to the formula

$$bi = \frac{i \times B \times k}{N},$$

where

bi = the width of the respective cutting face (2a, 3a, 4a, 6a, 7a, 8a, 9a) of a set of cutters

i = the number (1 to N), ascending opposite to the direction of rotation (D), of the cutters (2, 3, 4, 6, 7, 8, 9) of a set of cutters

B = the width of the cutting face (4a, 7a, 9a) of the cutter (4, 7, 9) of a set of cutters which is the last one opposite to the direction of rotation (D)

N = the total number of cutters (2, 3, 4, 6, 7, 8, 9) of a set of cutters

k = 0.7 to 1.5.

2. A hollow drill bit according to claim 1, characterised in that in the direction of increase of the cutting faces (2a, 3a, 4a, 6a, 7a, 8a, 9a) of the cutters (2, 3, 4, 6, 7, 8, 9) of a set of cutters the cutter (3, 4, 7, 9) which is the following one opposite to the direction of rotation is set back in relation to the respective cutter (2,6,8) in front of it by a height (h) measured parallel to the axis of the drill bit.

3. A hollow drill bit according to claim 2, characterised in that the height (h) is 0.1 to 1 mm.

4. A hollow drill bit according to any one of claims 1 to 3, characterised in that two to five cutters (2, 3, 4, 6, 7, 8, 9) are provided per set of cutters.

5. A hollow drill bit according to any one of claims 1 to 3, characterised in that one to eight sets of cutters are provided.

## Revendications

1. Foret tubulaire dont la face frontale située dans la direction de perçage est garnie d'au moins un jeu de lames comprenant au moins deux lames (2, 3, 4, 6, 7, 8, 9), les lames (2, 3, 4, 6, 7, 8, 9) de chacun des jeux de lames comportant des surfaces de coupe apparentes (2a, 3a, 4a, 6a, 7a, 8a, 9a) de différentes tailles orientées sensiblement dans la direction de rotation (D), et les lames (2, 3, 4, 6, 7, 8, 9) d'un même jeu de lames étant disposées de façon que la taille des surfaces de coupe (2a, 3a, 4a, 6a, 7a, 8a, 9a) augmente dans le sens opposé à la direction de rotation (D), caractérisé en ce que la largeur mesurée radialement (b) des surfaces de coupe (2a, 3a, 4a, 6a, 7a, 8a, 9a) des lames d'un jeu de lames se calcule selon la formule

$$bi = \frac{i \times B \times k}{N}$$

sachant que :

bi = largeur de chaque surface de coupe (2a, 3a, 4a, 6a, 7a, 8a, 9a) d'un jeu de lames

i = nombre (1 à N) de lames (2, 3, 4, 6, 7, 8, 9) d'un jeu de lames, ledit nombre étant croissant dans le sens opposé à la direction de rotation (D)

B = largeur de la surface de coupe (4a, 7a, 9a) de la lame (4, 7, 9) située, dans un jeu de lames, en dernière position dans le sens opposé à la direction de rotation (D)

N = nombre total de lames (2, 3, 4, 6, 7, 8, 9) d'un jeu de lames

k = 0,7 à 1,5

2. Foret tubulaire selon la revendication 1, caractérisé en ce que, dans le sens de l'accroissement des surfaces de coupe (2a, 3a, 4a, 6a, 7a, 8a, 9a) des lames (2, 3, 4, 6, 7, 8, 9) d'un même jeu de lames, la lame (3, 4, 7, 9) subséquente dans le sens opposé à la direction de rotation se trouve, par rapport à la lame (2, 6, 8) située devant elle, en retrait d'une hauteur (h) mesurée parallèlement à l'axe du foret tubulaire.

3. Foret tubulaire selon la revendication 2, caractérisé en ce que la hauteur (h) est comprise entre 0,1 et 1 mm.

4. Foret tubulaire selon l'une des revendications 1 à 3, caractérisé en ce qu'il est prévu de deux à cinq lames (2, 3, 4, 6, 7, 8, 9) par jeu de lames.

5. Foret tubulaire selon l'une des revendications 1 à 3, caractérisé en ce qu'il est prévu d'un à huit jeux de lames.

Fig. 2

Fig. 1

**Fig. 4**

**Fig. 3**